# EUROPEAN PATENT APPLICATION

(11) **EP 1 749 438 A1**
(43) Date of publication of application: **07.02.2007**
(21) Application number: 06016311.0
(22) Date of filing: 04.08.2006
(51) Int. Cl.: A01J 25/16

(54) **Apparatus for the transfer of a cheese board with one or more cheeses placed thereon**

(30) Priority: 05.08.2005 NL 1029685
(71) Applicant: Doeschot BV, 1800 AJ Alkmaar (NL); Dero BV, 2153 GL Nieuw Vennep (NL)
(72) Inventor: Dedel, Maro, 2153 GL Nieuw Vennep (NL); Smeltink, Frank, 1800 AJ Alkmaar (NL)
(74) Representative: Koomen, M.J.I.

(57) **Abstract**

Apparatus for the transfer of a cheese board (2) with one or more cheeses (3) placed thereon, more in particular from a container or a cheese box to a conveyor belt such as a roller conveyor, characterized in that it comprises a movable arm (6) which is provided with a supporting element (7) with one or more supporting arms (8) for the support of the cheese board (2), wherein the supporting element is rotatably connected to the arm and is provided with one or more swivelling mounted clamping arms (9) by means of which a cheese board with one or more cheeses placed thereon can be pushed against the supporting arms.

## Description

The present invention relates to an apparatus for the transfer of a cheese board with one or more cheeses placed thereon, more in particular from a container or a cheese box to a conveyor belt such as a roller conveyor.

Such an apparatus is known.

By means of the known apparatus the cheese board with the cheeses placed thereon is placed onto the conveyor belt, after which by means of another apparatus the cheeses are separated from the board, and whereby the cheeses are turned for the feeding of the cheeses to a plasticize or smier apparatus and of the boards to a board scrubbing brush.
The known apparatuses take up rather much space.

It is an object of the present invention to provide an apparatus by means of which the transfer of the cheese boards and the cheeses from the container to the conveyor and the turning of the cheeses can be simplified, while further thereby a saving of space can be obtained.

The apparatus according to the invention to that end is characterized in that it comprises a movable arm which is provided with a supporting element with one or more supporting arms for the support of the cheese board, wherein the supporting element is rotatably connected to the arm and is provided with one or more swivelling mounted clamping arms by means of which a cheese board with one or more cheeses placed thereon can be pushed against the supporting arms.

According to a characteristic of the apparatus according to the invention the clamping arms are substantially rod or pin shaped and of a thickness that is adapted to a roller conveyor, such, that the clamping arms fit in the spaces between the rolls in the roller conveyor.

According to a further characteristic of the apparatus according to the invention the supporting element comprises an oblong or rod shaped part whereby the supporting arms are mounted substantially at right angles to the part.

According to another characteristic of the apparatus according to the invention the clamping arms are mounted onto a bar which is connected swivelling and running parallel to the oblong or rod shaped part, while the bar, according to another characteristic of the apparatus according to the invention, is provided with at least one lip which is mounted to the connecting rod of a cylinder mounted to the oblong or rod shaped part, such, that when the cylinder is drawn in, the clamping arms are in a first, substantially vertical, position, in which the clamping arms are substantially at right angles with respect to the supporting arms, while, when the cylinder is pushed out, the clamping arms are moved towards the supporting arms into a second, substantially horizontal, position, in which the clamping arms run substantially parallel to the supporting arms, in such a way, that a cheese board with one or more cheeses can be clamped in the space between the supporting arms and the clamping arms.

The invention will now be described further with reference to the drawings of an example of an embodiment.

Figure 1 shows a perspective view of an example of an embodiment of the apparatus according to the invention, wherein the apparatus is shown while it takes a cheese board with thereon a number of cheeses out of a cheese box.

Figure 2 also shows a perspective view of the apparatus according to the invention, wherein this is placed in between a cheese box and a conveyor.

The figures 3 and 4 show a view corresponding to that of figure 2, whereby in figure 3 the apparatus is shown as it deposits the cheeses with the cheese board onto a roller conveyor, and whereby in figure 4 the apparatus is shown after it has released the cheese board with cheeses.

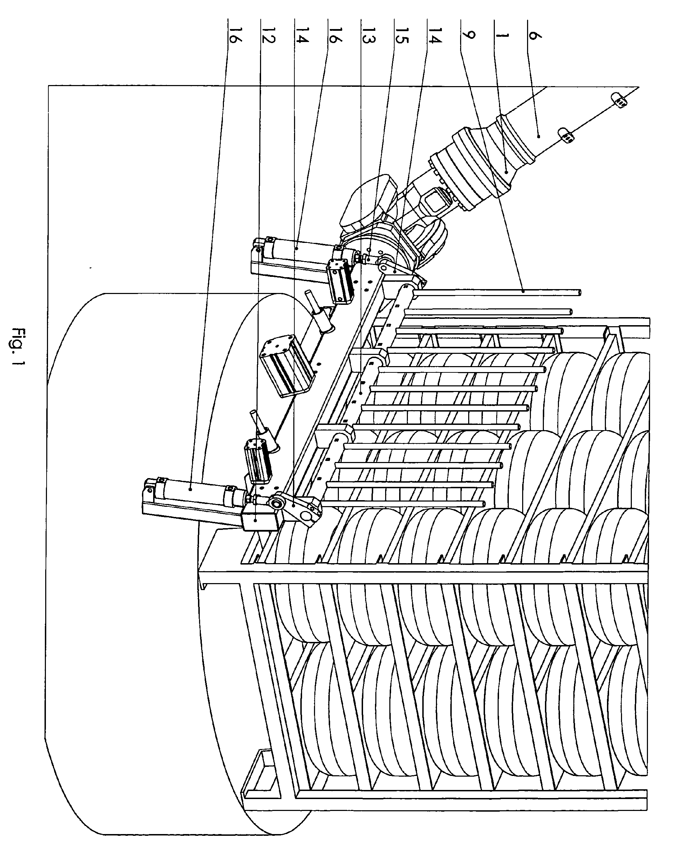

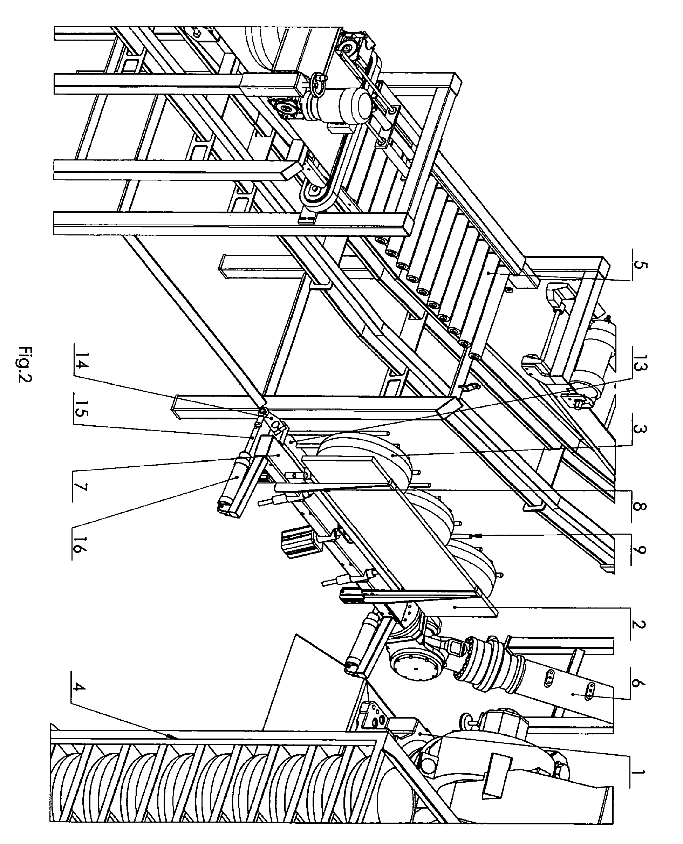

As can be seen in the figures 1 to 4 the apparatus 1 for the transfer of a cheese board 2 with one or more cheeses 3 placed thereon from a cheese box 4 to a conveyor belt such as a roller conveyor 5 comprises a movable arm 6 which is provided with a supporting element 7 with one or more supporting arms 8 for the support of the cheese board 2. As can be seen in the figures the supporting element 7 is rotatably connected to the arm 6. The supporting element 7 is further provided with a row of clamping arms 9. The clamping arms 9 are in the example of the shown embodiment rod shaped and of a thickness that is smaller than the spaces 10 between the rolls 11 in the roller conveyor, such that the clamping arms 9 can countersink between the rolls 11.
In the example of the shown embodiment the supporting element 7 is formed by an oblong or rod shaped part 12 whereby the supporting arms 8 are mounted substantially at right angles to the part 12. The clamping arms 9 are mounted onto a bar 13 which is connected swivelling and running parallel to the oblong or rod shaped part 12.
The bar 13 is provided with at least one lip 14 which is mounted to the connecting rod 15 of a cylinder 16 which is mounted to the oblong or rod shaped part 12. When the cylinder 16 is drawn in the clamping arms 9 are in a first, substantially vertical, position, in which the clamping arms 9 are substantially at right angles with respect to the supporting arms 8, while, when the cylinder 16 is pushed out, the clamping arms 9 are moved towards the supporting arms 8 into a second, substantially horizontal, position, in which the clamping arms 9 run substantially parallel to the supporting arms 8, in such a way, that a cheese board with one or more cheeses can be clamped in the space between the supporting arms 8 and the clamping arms 9.

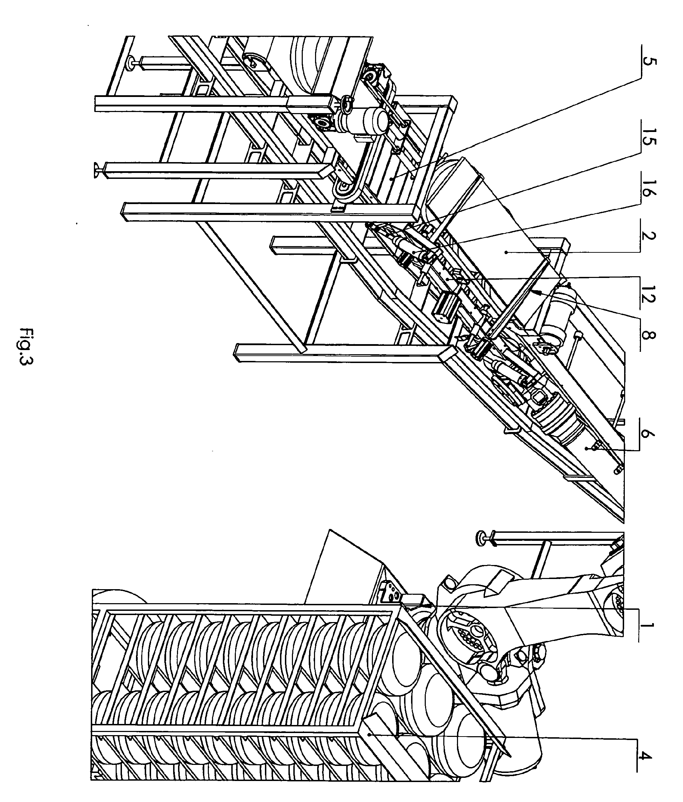

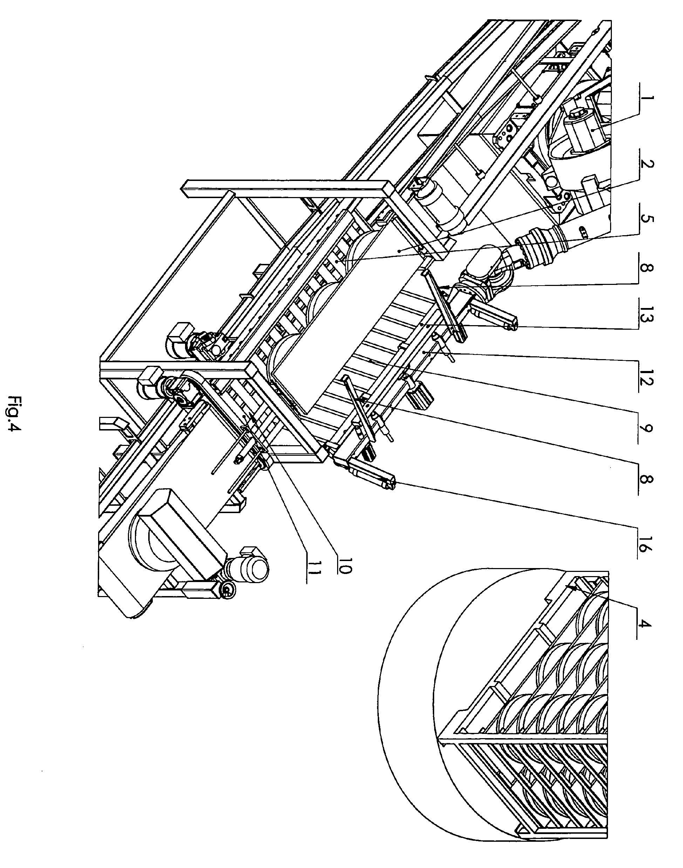

As can be seen in figure 1, by means of the apparatus 1 a cheese board 2 with thereon a number of cheeses 3 is taken out of a cheese box 4, whereby the supporting arms 8 are placed underneath the board 2, after which the arm 6 with the supporting element 7 lifts the board 2 out of the cheese box 4. As can be seen in the figures 3 and 4 the clamping arms 9 are moved from a substantially vertical position towards the supporting arms 8 into a substantially horizontal position in which these run parallel to the supporting arms 8. In the space between the supporting arms 8 and the clamping arms 9 the cheese board 2 with the cheeses 3 can be clamped, in such a way, that the board 2 with the cheeses 3 can be turned in the air, to which end the arm 6 is rotated. Thereafter, by means of the apparatus, the cheeses 3 are placed upon the roller conveyor 5 as can be seen in the figures 3 and 4, whereby the board 2 now lies on top of the cheeses 3 en can be lifted therefrom for the feeding thereof to the board scrubbing brush, while the cheeses 3 can be fed to the plasticize or smier apparatus.

## Claims

1. Apparatus for the transfer of a cheese board with one or more cheeses placed thereupon, more in particular from a container or a cheese box to a conveyor belt such as a roller conveyor, **characterized in that** it comprises a movable arm which is provided with a supporting element with one or more supporting arms for the support of the cheese board, wherein the supporting element is rotatably connected to the arm and is provided with one or more swivelling mounted clamping arms by means of which a cheese board with one or more cheeses placed thereon can be pushed against the supporting arms.

2. Apparatus according to claim 1, **characterized in that** the clamping arms are substantially rod or pin shaped and of a thickness that is adapted to a roller conveyor, such, that the clamping arms fit in the spaces between the rolls in the roller conveyor.

3. Apparatus according to claim 1 or 2, **characterized in that** the supporting element comprises an oblong or rod shaped part whereby the supporting arms are mounted substantially at right angles to the part.

4. Apparatus according to one of the preceding claims, **characterized in that** the clamping arms are mounted onto a bar which is connected swivelling and running parallel to the oblong or rod shaped part.

5. Apparatus according to claim 4, **characterized in that** the bar is provided with at least one lip which is mounted to the connecting rod of a cylinder mounted to the oblong or rod shaped part, such, that when the cylinder is drawn in, the clamping arms are in a first, substantially vertical, position, in which the clamping arms are substantially at right angles with respect to the supporting arms, while, when the cylinder is pushed out, the clamping arms are moved towards the supporting arms into a second, substantially horizontal, position, in which the clamping arms run substantially parallel to the supporting arms, in such a way, that a cheese board with one or more cheeses can be clamped in the space between the supporting arms and the clamping arms.
